# FASCICULE DE BREVET EUROPEEN

(11) **EP 3 714 325 B1**
(45) Date de publication et mention de la délivrance du brevet: **26.08.2026**
(21) Numéro de dépôt: 18807629.3
(22) Date de dépôt: 23.11.2018
(51) Int. Cl.: G03B 15/06, G01B 11/245, G03B 35/08, H04N 23/90

(54) **DISPOSITIF D'ACQUISITION DU VISAGE D'UN INDIVIDU PAR PHOTOGRAMMETRIE**
VORRICHTUNG ZUR FOTOGRAMMETRISCHEN ERFASSUNG DES GESICHTES EINER PERSON
DEVICE FOR ACQUIRING THE FACE OF A PERSON BY PHOTOGRAMMETRY

(30) Priorité: 24.11.2017 FR 1761147
(43) Date de publication de la demande: 30.09.2020
(73) Titulaire: Me Group International PLC, Epsom, Surrey KT19 9AP (GB)
(72) Inventeur: CROLL, Christian, 38640 Claix (FR)
(74) Mandataire: Ipsilon
(86) Numéro de dépôt international: PCT/EP2018/082325
(87) Numéro de publication internationale: WO 2019/101901

(56) Documents cités:
- WO-A1-2017/067941
- FR-A1- 3 016 028
- JP-A- 2002 175 543
- JP-A- 2007 180 866

## Description

### DOMAINE DE L'INVENTION

L'invention s'inscrit dans le domaine général du contrôle d'accès, ainsi que toutes ses déclinaisons.

Par contrôle d'accès, on entend les dispositifs aptes à acquérir des données, notamment biométriques ou photographiques, d'un individu, et corollairement, après acquisition de ces données, de donner ou non l'autorisation d'accéder à un lieu déterminé ou à une prestation déterminée, à l'individu en question.

La présente invention s'inscrit plus particulièrement dans le cadre de l'acquisition des données morphologiques du visage d'un utilisateur.

### ETAT ANTERIEUR DE LA TECHNIQUE

Parmi les systèmes connus d'acquisition des données représentatives du visage d'un individu en mode 3D, différentes solutions ont été proposées à ce jour, parmi lesquelles figurent la mise en œuvre de lumières structurées telles qu'un scanner stéréoscopique, et la photogrammétrie.

Concernant la mise en œuvre de lumières structurées, cette technologie s'avère inadaptée lorsque l'on souhaite acquérir l'image 3D de l'utilisateur rapidement. En effet, cette technologie ne permet pas, en une seule acquisition, de capter les portions de volume cachées du visage.

La photogrammétrie est une technologie aujourd'hui maîtrisée, mettant en œuvre la parallaxe obtenue entre des images acquises selon des points de vue différents. Elle est basée sur la perception humaine du relief par observation stéréoscopique.

Dans le cadre plus spécifique du domaine technique de l'invention, on a décrit dans le document FR 2 987 908, un dispositif de numérisation en trois dimensions d'une portion périphérique céphalique humaine, mettant en œuvre une pluralité d'appareils de prise de vue, positionnés selon une même hauteur au sein d'une coque opaque creuse présentant une ouverture apte à recevoir la tête de l'individu dont on souhaite obtenir l'image 3D du visage.

L'expérience démontre cependant qu'un tel dispositif génère une image 3D relativement imprécise du visage de l'utilisateur, et en tout cas incompatible avec un certain nombre d'applications de contrôle d'accès dans lequel se situe le domaine de l'invention.

En effet, ce dispositif préconise la mise en œuvre de caméras positionnées selon un même plan horizontal, ce qui interdit de capter certaines zones cachées du visage. En outre, les caméras en question ne sont pas synchronisées entre elles, et sont dépourvues de mémoire, augmentant de fait la sensibilité aux changements d'expression.

Par ailleurs, les caméras décrites sont du type webcam a flux vidéo compressé, détériorant la qualité de l'acquisition.

Enfin, la hauteur du plan, dans lequel sont inscrites les caméras n'est pas réglable, et le dispositif est dépourvu de tout système avancé d'aide au centrage de l'individu, réduisant en conséquence la qualité de l'acquisition.

Or l'invention vise plus particulièrement un dispositif permettant d'acquérir une image 3D optimisée du visage d'un utilisateur, ce, rapidement, typiquement en une durée inférieure à une seconde, à l'aide d'un dispositif interactif simple à mettre en œuvre par l'utilisateur concerné. L'acquisition des données est réalisée typiquement en moins de 50ms voir moins de 20ms. La reconstruction 3D peut être désynchronisée dans le temps (quelques secondes à quelques dizaines de secondes).

### EXPOSE DE L'INVENTION

A cet effet, l'invention vise un dispositif d'acquisition 3D du visage d'un individu par photogrammétrie, constitué d'un kiosque vertical comprenant :
- un organe d'acquisition proprement dit dudit visage, intégrant :
   - un moyen d'acquisition d'une image dudit visage,
   - au moins quatre moyens d'acquisition dudit visage, décalés latéralement et verticalement par rapport au moyen d'acquisition central, symétriques deux à deux par rapport à l'axe optique dudit moyen d'acquisition central ; et
   symétriques deux à deux par rapport à un plan vertical médian passant par l'axe optique du moyen d'acquisition central et par rapport un plan horizontal passant également par l'axe optique du moyen d'acquisition central ;
- un organe d'éclairement du visage de l'utilisateur, comprenant six bandeaux lumineux, orientés verticalement, symétriques deux à deux par rapport au plan vertical médian passant par l'axe optique du moyen d'acquisition central ;
- une unité de traitement et de gestion de ces différents organes, notamment du fonctionnement desdits organes d'acquisition, et de stockage des données ainsi acquises, outre du déclenchement des organes d'éclairement ;
- un organe d'interaction de l'utilisateur avec l'unité de traitement et de gestion.

En outre, et selon l'invention, le kiosque comprend un plafond, recouvrant au moins la zone d'implantation de l'organe d'acquisition et le lieu de positionnement de l'utilisateur lors de l'acquisition de l'image 3D de son visage.

En d'autres termes, l'invention vise un dispositif de type kiosque, c'est-à-dire d'encombrement tout particulièrement réduit, permettant à un utilisateur en station debout, voire en fauteuil roulant s'il est à mobilité réduite, d'acquérir une image 3D de son visage de manière simple, interactive, rapide et efficace.

Selon une caractéristique de l'invention, le dispositif comprend en outre un plafond, recouvrant au moins la zone d'implantation de l'organe d'acquisition et le lieu de positionnement de l'utilisateur lors de l'acquisition de l'image 3D de son visage, ce, dans un souci de limiter le plus possible les éclairements parasites, susceptibles d'affecter la qualité de l'acquisition.

Selon une autre caractéristique de l'invention, l'organe d'acquisition est susceptible de se déplacer verticalement, dans le but d'adapter l'axe optique dudit organe à la hauteur de l'individu.

Avantageusement, les moyens d'acquisition secondaires, c'est-à-dire autres que le moyen d'acquisition central, sont non pas au nombre de quatre mais au nombre de six, et notamment trois positionnés selon un plan supérieur par rapport au plan horizontal contenant l'axe optique du moyen d'acquisition central, et trois autres positionnés en plan inférieur par rapport audit plan, les plans respectifs d'implantation des moyens d'acquisition supérieurs et inférieurs étant symétriques l'un de l'autre par rapport au plan horizontal passant par l'axe optique du moyen d'acquisition central.

Avantageusement, les moyens d'acquisition sont constitués de caméras, positionnées sur une portion courbe, typiquement sur une portion de sphère, dans le but d'optimiser l'acquisition et le traitement ultérieur des images acquises par lesdites caméras.

Avantageusement, l'organe d'interaction, par exemple constitué d'un écran tactile positionné latéralement par rapport aux organes d'acquisition et aux organes d'éclairement, comporte également un dispositif scanner de papiers d'identité (passeport, carte d'identité ou autre etc.).

Il est également susceptible d'être associé à un organe de réalisation et de délivrance de badge (type badges à puce ou à code barre etc.).

Selon une caractéristique avantageuse, l'organe d'acquisition central effectue une reconnaissance faciale de l'individu, notamment afin d'assurer le centrage de l'ensemble du dispositif d'acquisition en fonction de la taille dudit individu.

Alternativement, et à cette même fin, le dispositif comprend une caméra supplémentaire, fixée sous le plafond précité, et avantageusement susceptible d'être animé d'un mouvement de rotation par rapport à un axe vertical.

### BREVE DESCRIPTION DES FIGURES

La manière dont l'invention peut être réalisée, et les avantages qui en découlent, ressortiront mieux de l'exemple de réalisation qui suit, donné à titre indicatif et non limitatif à l'appui des figures annexées.
La figure 1 est une représentation schématique en perspective vue de face du dispositif d'acquisition 3D conforme à l'invention.
La figure 2 est une vue analogue à la figure 1, illustrant davantage dans le détail l'organe d'acquisition.
La figure 3 est une vue schématique de l'organe d'acquisition, dont les figures 4, 5 et 6 sont des représentations de certains éléments plus en détail.

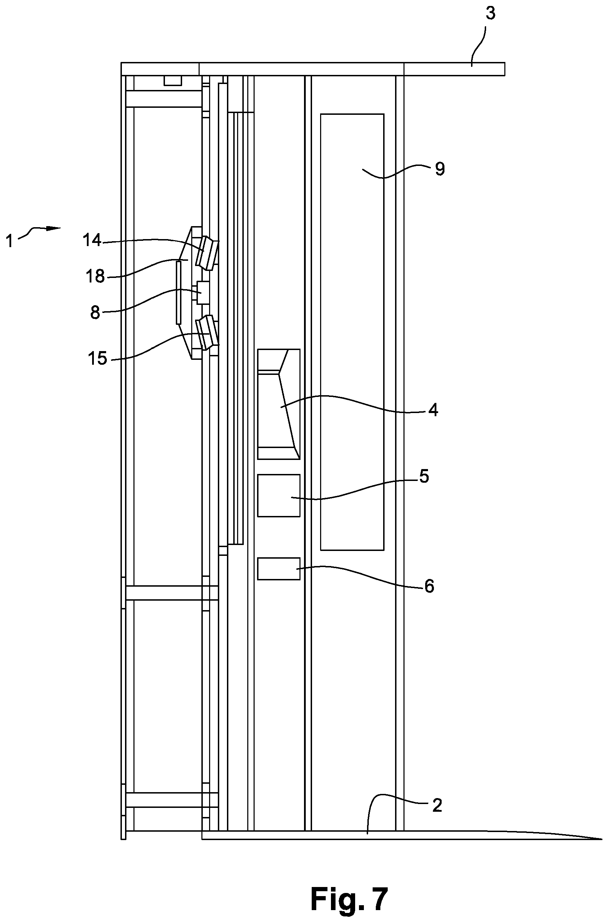

La figure 7 est une représentation schématique en section sagittale du dispositif de l'invention.
La figure 8 est une représentation schématique en section transversale du dispositif de l'invention.
La figure 9 est un schéma illustratif du centrage correct de l'utilisateur devant les moyens d'acquisition.

### DESCRIPTION DETAILLEE DE L'INVENTION

Comme déjà indiqué, l'invention propose un kiosque d'acquisition d'une image 3D d'un utilisateur. Ce dispositif se présente, comme déjà dit, sous la forme d'un kiosque (1) dont l'intérieur est typiquement semi-circulaire pour les raisons indiquées ci-après.

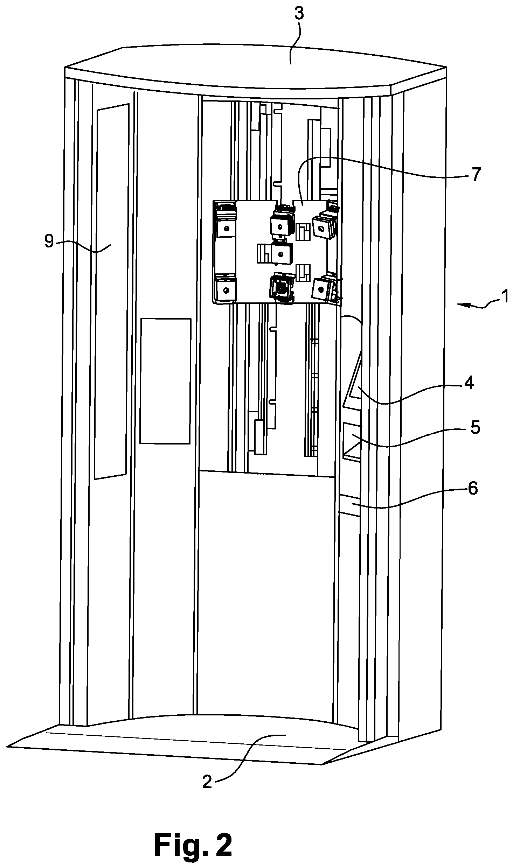

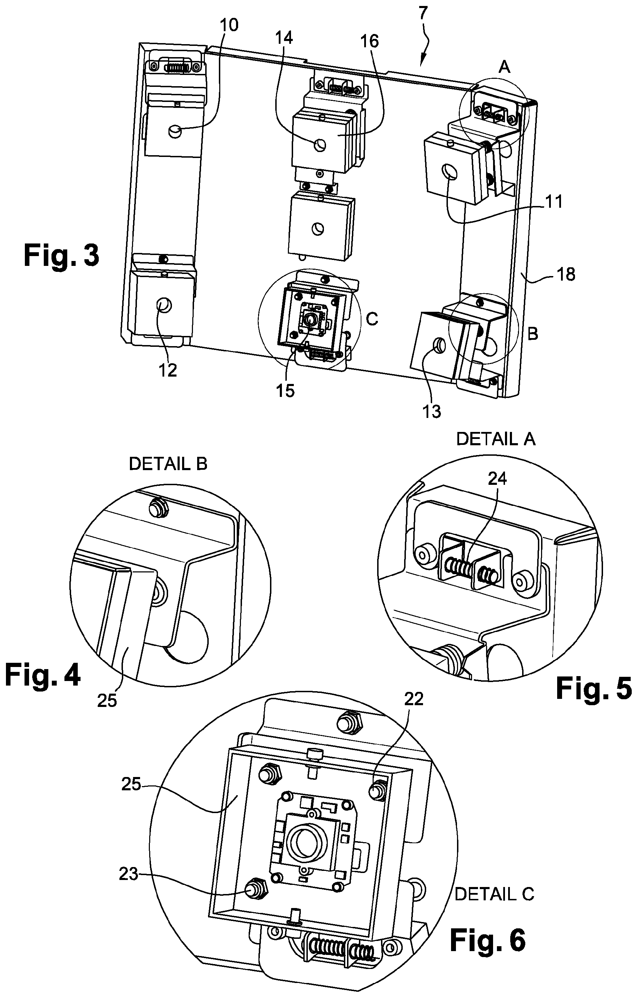

Ce kiosque comporte fondamentalement une cloison interne verticale intégrant, d'une part, un certain nombre de moyens d'acquisition (7), illustrés plus en détail au sein des figures 2 et 3, d'autre part, un certain nombre de moyens d'éclairement (9), et en outre, un plafond (3). La face inférieure du plafond (3), c'est-à-dire dirigée vers le volume défini par le kiosque, est avantageusement de couleur mat et blanche afin d'assurer le renvoi de la lumière générée par les organes d'éclairement par diffusion, et plus particulièrement afin d'éclairer le dessus du visage, et de réduire l'influence de l'éclairage extérieur par effet de masquage.

Comme déjà indiqué, l'acquisition de l'image 3D du visage de l'utilisateur est réalisée par photogrammétrie. A cet effet, le dispositif de l'invention comporte, dans l'exemple décrit, sept moyens d'acquisition du visage de l'utilisateur. Ces moyens sont, en l'espèce, constitués de caméras. Ces caméras peuvent être par exemple du type Matrix Vision MvBlueFox MLC205C ou mvBlueFOX3 commercialisées par la société MATRIX VISION GmbH. Elles sont positionnées sur une portion de sphère, afin d'optimiser le traitement ultérieur par photogrammétrie des images ainsi acquise.

Elles présentent une résolution minimum de 3Mp, idéalement de 5Mp. Elles sont susceptibles de fonctionner en mode portrait, avec un angle de vision Theta_y = 41.15 degrés et Theta_x = 31.45 degrés. Elles ont avantageusement une profondeur de champ de l'ordre de 20 centimètres.

Elles sont toutes synchronisées par un signal électrique de synchronisation.

Les axes optiques respectifs desdites caméras pointent sur le sujet selon des angles différents. A cet effet, ces sept caméras sont positionnées sur une surface courbe, ou de telle façon que leur axe optique respectif converge avec l'axe optique de la caméra centrale (8) au niveau du visage de l'utilisateur, typiquement à une distance d'environ 50 centimètres de ladite caméra centrale (8).

Plus spécifiquement, et ainsi que décrit en relation avec la figure 3, ces sept caméras sont constituées d'une caméra centrale (8), qualifiée de caméra maîtresse, et de six caméras (10 - 15), dites caméras esclaves. La caméra centrale (8) a pour vocation à privilégier la texture de face du visage à acquérir.

Les six caméras esclaves sont respectivement positionnées au-dessus et au-dessous de la caméra centrale (8). Plus précisément, les caméras esclaves sont symétriques deux à deux par rapport à un plan vertical médian passant par l'axe optique de la caméra centrale et par rapport un plan horizontal passant également par l'axe optique de la caméra centrale.

Typiquement, et à titre purement exemplatif, l'inclinaison de l'axe optique des caméras esclaves par rapport au plan horizontal passant par l'axe optique de la caméra centrale présente un angle voisin de 12.8 degrés. Corollairement, l'inclinaison de l'axe optique des caméras esclaves par rapport à un plan vertical médian passant par l'axe optique de la caméra centrale présente un angle voisin de 19.6 degrés. Ces valeurs d'angle sont compatibles avec la fiabilité de la photogrammétrie.

La synchronisation de l'ensemble de ces caméras esclaves est gérée par la caméra centrale, cette dernière étant elle-même sous la dépendance d'un logiciel stocké dans une unité centrale de traitement et de gestion, logée dans le dispositif (et non représentée). Chacune des caméras mises en œuvre dispose d'une mémoire pour stocker une photographie. Avantageusement, une mémoire dimensionnée pour le stockage de plusieurs photographies sur chaque caméra permet dans une courte session d'enrôlement de quelques secondes, de capturer plusieurs expressions et donc de renforcer la robustesse de la biométrie utilisant la capture 3D.

Le temps d'acquisition, afin de minimiser l'effet de bougé de l'utilisateur, est typiquement inférieur à 20 ms.

A partir de ces sept acquisitions simultanées, un algorithme de photogrammétrie connu, et par exemple Autodesk 123d Catch, logiciel de photogrammétrie en ligne, permet de reconstruire le modèle 3D du visage par photogrammétrie.

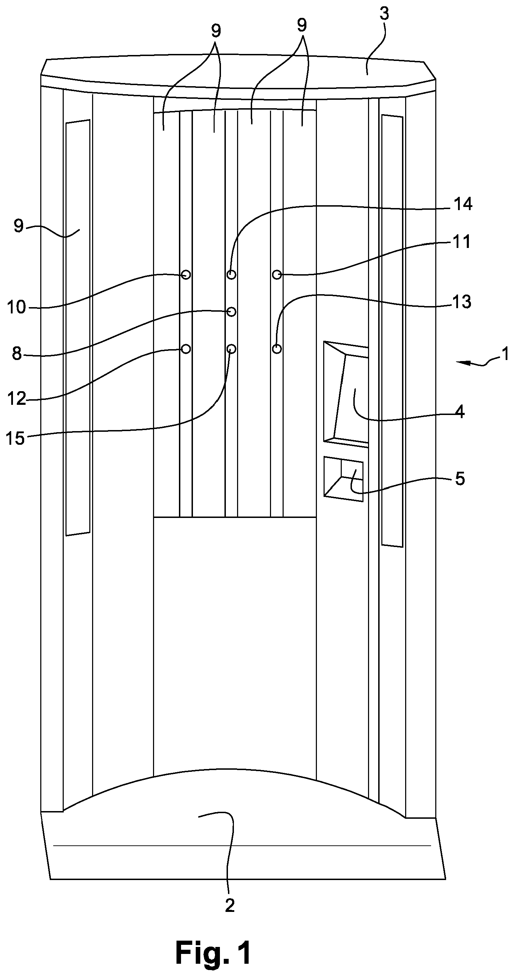

Corollairement, le dispositif de l'invention comprend également des organes d'éclairement, en l'espèce constitués de bandeaux lumineux verticaux (9), disposés là encore, symétriquement par rapport à un plan vertical médian passant par l'axe optique de la caméra centrale, et qu'on a au demeurant représenté schématiquement notamment sur la figure 1.

Dans l'exemple décrit, ces organes d'éclairement sont constitués de six bandeaux lumineux, les deux premiers étant intégrés entre les trois caméras (8, 14, 15) positionnées sur un même plan vertical de la caméra centrale et respectivement les quatre caméras latérales (10, 12) et (11, 13), les deux suivants étant immédiatement à proximité desdites caméras latérales, et les deux derniers au voisinage des bords latéraux de la cloison verticale du kiosque.

L'objectif recherché est de disposer d'un éclairement satisfaisant pour optimiser la qualité de l'image 3D du visage de l'utilisateur.

La verticalité de ces dispositifs d'éclairement permet de rendre homogène l'éclairage, quelle que soit la taille de l'individu dont on acquiert ainsi l'image 3D du visage.

Avantageusement, chacun de ces bandeaux lumineux verticaux est composé d'une boîte support, dont la face interne est réfléchissante et diffusante, et éclairée par deux bandes de diodes électroluminescentes standards.

La luminosité globale engendrée par l'ensemble de ces organes d'éclairement est typiquement supérieure à 2500 lux, cela encore dans l'objectif de minimiser l'influence de l'éclairage extérieur connu pour être perturbateur.

Le kiosque de l'invention comporte également un organe interactif, afin de permettre à l'utilisateur d'initier la séquence proprement dite d'acquisition, outre de le guider lors de cette opération.

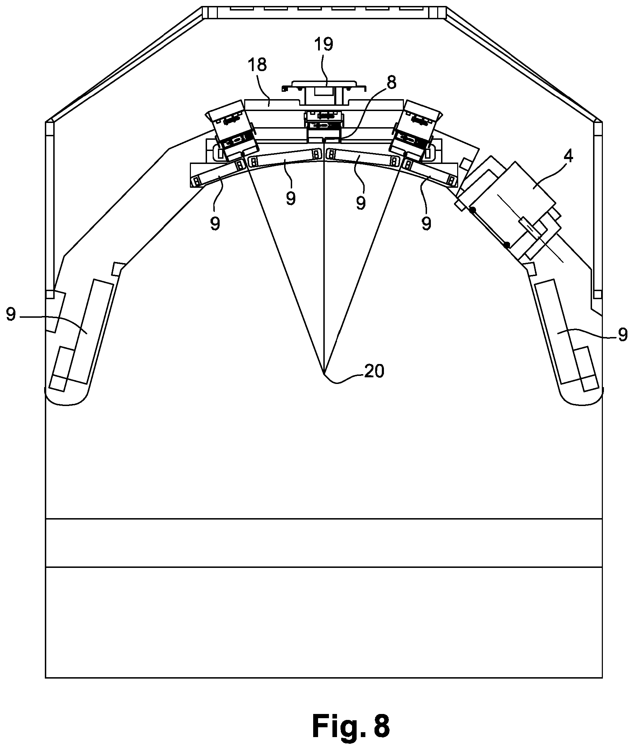

Cet organe interactif est typiquement positionné entre l'organe d'éclairage le plus périphérique et l'organe d'éclairage intermédiaire, ainsi qu'on peut l'observer sur les figures 1 et 8.

Cet organe interactif est principalement constitué d'un écran tactile (4), de dimensions standards, permettant d'indiquer à l'utilisateur, par différents messages voire pictogrammes, la séquence d'opération à initier.

Avantageusement, cet organe interactif, relié à l'unité de traitement et de gestion, est associé à un organe (5) d'acquisition ou de saisie des pièces d'identité de l'utilisateur, typiquement passeport ou carte d'identité, constitué par exemple d'un scanner, là encore d'un type en soi connu.

Par ailleurs, il peut être associé au dispositif, un organe de réalisation de badges (6), générés après acquisition de l'image 3D, et le cas échéant requis notamment dans le cadre d'un dispositif plus global d'enrôlement à une manifestation donnée.

Il peut également comprendre un organe d'acquisition (non représenté) de données biométriques de type prise d'empreinte, signature etc.

Avantageusement, le dispositif comprend sur le plancher (2), un marquage, par exemple des empreintes de pas pour inviter l'utilisateur à mettre ses pas sur lesdites empreintes, ou un marquage de roues dans le cadre de personnes à mobilité réduite se présentant dans un fauteuil roulant, et ce, afin de favoriser et d'optimiser le positionnement de l'utilisateur en fonction du positionnement des caméras d'acquisition.

Typiquement, la distance de prise de vue est de l'ordre de 50 centimètres, ce, dans un double souci de minimiser encore une fois l'influence de l'éclairage extérieur, et d'autre part, pour optimiser la netteté de la vue 3D acquise.

La géométrie des caméras de l'organe d'acquisition, et notamment l'orientation de leur axe optique respectif, est calibrée en fabrication, et contrôlée périodiquement sur site à l'aide d'une mire de contrôle fixée temporairement par deux aimants au plafond sur deux repères. Ces repères sont différents pour chaque groupe de caméras, respectivement (10, 12), (14, 8, 15) et (11, 13). L'axe formé par ces deux repères et perpendiculaire à l'axe optique des caméras.

Le réglage de cette géométrie est obtenu par des moyens simples, décrits plus en détail en relation avec les figures 4 à 6. Ainsi, afin de procéder à ce réglage, le capot de protection (16) de la caméra considérée est dévissé, donnant ainsi accès à deux vis de réglage (22, 23), permettant d'orienter le boitier (25) de la caméra, et en conséquence l'axe optique de cette dernière sur les plans latéral et vertical. L'orientation horaire de la caméra est assurée par une vis (24) située sur l'un des côtés du boitier caméra.

Cette même mire permet de calibrer d'autres paramètres des caméras, comme la dynamique des caméras, la balance des blancs des caméras, l'espace des couleurs, et le facteur de netteté desdites caméras.

Une difficulté de l'acquisition du visage d'un individu en position debout réside dans le centrage dudit individu sur les trois axes :
- vertical : lié à la hauteur de l'individu,
- profondeur : lié à un positionnement sur l'axe optique de la caméra centrale trop prêt ou trop loin du point de focus,
- latéral : individu trop à gauche ou trop à droite de l'axe optique de la caméra centrale.

Le centrage automatique sur l'axe vertical du visage de l'individu peut être assuré par reconnaissance faciale par la caméra centrale (8), fonctionnant alors en mode basse résolution pour ainsi minimiser la durée d'ajustement de la hauteur du système d'acquisition (7), en actionnant un support (18) mobile verticalement au moyen de tout type d'actionneur

Par ailleurs, le centrage selon l'axe vertical du visage peut être également préréglé par la récupération des données biométriques saisies, le cas échéant, par scan des documents d'identité de l'utilisateur, indiquant, de manière connue, les mensurations de ce dernier, et notamment sa taille.

Optionnellement, une caméra grand-angle (non représentée), située dans le plan vertical de la caméra centrale, peut être mise en œuvre pour estimer la taille globale du sujet.

Le centrage en profondeur peut en outre être contrôlé par la reconnaissance faciale des caméras latérales (10, 12 ; 11, 13) : un désaxage des yeux gauche ou droit indique un sujet trop proche ou trop éloigné.

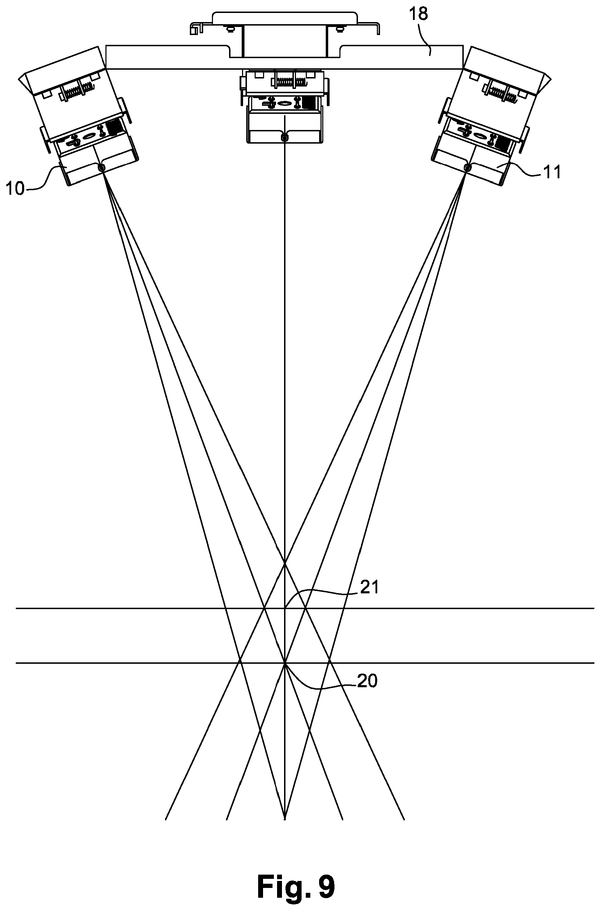

Ainsi, les caméras (10) et (11) sont orientées de manière convergente à 50 centimètres de leur centre optique. Si les yeux de l'individu sont positionnés en ce point (20), alors les deux caméras (par exemple (10) et (11)) perçoivent un visage centré. Si l'individu est trop proche (21), les yeux se décalent à gauche sur l'une desdites caméras, et à droite sur l'autre (voir figure 9).

Avantageusement, ce centrage peut également être contrôlé au moyen d'une caméra de surveillance (non représentée)) située à la verticale du sujet et intégrée dans le plafond (3).

Le centrage en latéral est réalisé naturellement par l'individu, qui voit son reflet sur la paroi semi-réfléchissante positionnée sur l'axe optique du système d'acquisition (7). La qualité de ce centrage latéral est contrôlée par la détection de la position latérale du visage obtenue par acquisitions numérique de la caméra centrale.

L'orientation correcte du regard de l'individu est assurée par un réseau de diodes électroluminescentes (LEDS) clignotantes (17) quelques instants avant l'acquisition. Ces LEDS sont positionnées à proximité de la caméra centrale (8) et de son axe optique (voir figure 3).

La surface de ces LEDS (17) est masquée par un film semi-transparent et d'apparence noire en réflexion. Un tel masquage permet d'éviter les réflexions parasites générées par lesdites LEDS sur la paroi semi transparente positionnée entre l'individu et le chemin optique des caméras.

L'ensemble des sept caméras d'acquisition est monté sur un support (18) mobile verticalement, au moyen d'un moteur pas à pas, d'un système de courroie ou équivalent (19), asservi à l'unité centrale de traitement et de gestion en fonction de la détection de la hauteur de l'utilisateur.

L'unité centrale et de gestion est typiquement constituée d'un ordinateur de type PC, ce dernier étant avantageusement muni d'une connexion réseau, d'un hub USB, d'un connecteur réseau ou encore d'un routeur wi-fi. Un configurateur réseau assure avantageusement la confidentialité des données de l'utilisateur.

## Revendications

1. Dispositif d'acquisition 3D du visage d'un individu par photogrammétrie, constitué d'un kiosque (1) vertical, comprenant :
- un organe d'acquisition proprement dit (7) dudit visage, intégrant un premier moyen d'acquisition d'une image dudit visage (8),
- un organe d'éclairement du visage de l'utilisateur, comprenant six bandeaux lumineux (9), orientés verticalement, symétriques deux à deux par rapport au plan vertical médian passant par l'axe optique du moyen d'acquisition central (8);
- une unité de traitement et de gestion de ces différents organes, notamment du fonctionnement desdits organes d'acquisition, et de stockage des données ainsi acquises, outre du déclenchement des organes d'éclairement et du déplacement des moyens d'acquisition, ladite unité de traitement et de gestion étant apte à engendrer l'acquisition simultanée de ladite image du visage par les moyens d'acquisition (8 ; 10, 12 ; 11, 13), le temps d'acquisition par lesdits moyens étant inférieur à 50 millisecondes ;
- un organe (4) d'interaction de l'utilisateur avec l'unité de traitement et de gestion ;
**caractérisé en ce que** le premier moyen d'aquisition d'une image (8) est central et entouré d'au moins quatre moyens (10, 12 ; 11, 13) d'acquisition dudit visage, décalés latéralement et verticalement par rapport au premier moyen d'acquisition (8), symétriques deux à deux par rapport à l'axe optique dudit premier moyen d'acquisition (8), et symétriques deux à deux par rapport à un plan vertical médian passant par l'axe optique du moyen d'acquisition central (8) et par rapport à un plan horizontal passant également par l'axe optique du premier moyen d'acquisition (8) et **en ce que**
ledit kiosque est muni d'un plafond recouvrant au moins la zone d'implantation de l'organe d'acquisition et le lieu de positionnement de l'utilisateur lors de l'acquisition de l'image 3D de son visage.

2. Dispositif d'acquisition 3D du visage d'un individu par photogrammétrie selon la revendication 1, ***caractérisé* en ce que** le temps d'acquisition par les moyens d'acquisition est inférieur à 20 millisecondes.

3. Dispositif d'acquisition 3D du visage d'un individu par photogrammétrie selon l'une des revendications 1 et 2, ***caractérisé* en ce que** le kiosque (1) est de section horizontale sensiblement semi-circulaire, et dont la paroi verticale reçoit les organes d'acquisition et d'éclairement.

4. Dispositif d'acquisition 3D du visage d'un individu par photogrammétrie selon l'une des revendications 1 à 3, ***caractérisé* en ce que** les moyens d'acquisition sont positionnés sur une surface courbe, et notamment sur une portion de sphère.

5. Dispositif d'acquisition 3D du visage d'un individu par photogrammétrie selon l'une des revendications 1 à 4, ***caractérisé* en ce que** les moyens d'acquisition secondaires, c'est-à-dire autres que le moyen d'acquisition central, sont au nombre de six, respectivement trois (10, 11, 14) positionnés selon un plan supérieur par rapport au plan horizontal contenant l'axe optique du moyen d'acquisition central (8), et trois (12, 13, 15) positionnés selon un plan inférieur par rapport audit plan, les plans respectifs d'implantation des moyens d'acquisition supérieurs et inférieurs étant symétriques l'un de l'autre par rapport au plan horizontal passant par l'axe optique du moyen d'acquisition central.

6. Dispositif d'acquisition 3D du visage d'un individu par photogrammétrie selon l'une des revendications 1 à 5, ***caractérisé* en ce que** l'organe d'interaction est constitué d'un écran tactile positionné latéralement par rapport aux organes d'acquisition et aux organes d'éclairement, et **en ce qu'**il est avantageusement complété par un scanner des papiers d'identité de l'utilisateur, outre d'un organe de réalisation et de délivrance de badges, notamment d'accès.

7. Dispositif d'acquisition 3D du visage d'un individu par photogrammétrie selon l'une des revendications 1 à 6, ***caractérisé* en ce qu'**il comprend une caméra supplémentaire, dite de surveillance, fixée sous le plafond (3), et avantageusement susceptible d'être animée d'un mouvement de rotation par rapport à un axe vertical.

## Patentansprüche

1. 3D-Gesichtserfassungsvorrichtung eines Individuums mittels Photogrammetrie, bestehend aus einem vertikalen Kiosk (1), umfassend:
- ein eigentliche Aufnahmeeinrichtung (7) des genannten Gesichts, die ein erstes Mittel zur Aufnahme eines Bildes des genannten Gesichts (8) integriert,
- eine Beleuchtungseinrichtung für das Gesicht des Benutzers, umfassend sechs vertikal ausgerichtete Leuchtbänder (9), die paarweise symmetrisch zu einer vertikalen Mittelebene sind, welche durch die optische Achse des zentralen Aufnahmemittels (8) verläuft;
- eine Steuereinheit und Verarbeitungseinheit für diese verschiedenen Einrichtungen, insbesondere für den Betrieb der genannten Aufnahmeeinrichtungen und die Speicherung der so erfassten Daten, sowie für das Auslösen der Beleuchtungseinrichtungen und die Bewegung der Aufnahmemittel, wobei die genannte Steuereinheit und Verarbeitungseinheit dazu geeignet ist, die gleichzeitige Aufnahme des genannten Gesichtsbildes durch die Aufnahmemittel (8; 10, 12; 11, 13) zu erzeugen, wobei die Aufnahmezeit durch die genannten Aufnahmemittel weniger als 50 Millisekunden beträgt;
- eine Einrichtung (4) zur Interaktion des Benutzers mit der Steuereinheit und Verarbeitungseinheit;
**dadurch gekennzeichnet, dass** das erste Mittel zur Bildaufnahme (8) zentral angeordnet ist und von mindestens vier Aufnahmemitteln (10, 12; 11, 13) des genannten Gesichts umgeben ist, die gegenüber dem ersten Aufnahmemittel (8) seitlich und vertikal versetzt sind, paarweise symmetrisch in Bezug auf die optische Achse des genannten ersten Aufnahmemittels (8) sind und paarweise symmetrisch in Bezug auf eine vertikale Mittelebene sind, die durch die optische Achse des zentralen Aufnahmemittels (8) verläuft, sowie in Bezug auf eine horizontale Ebene, die ebenfalls durch die optische Achse des ersten Aufnahmemittels (8) verläuft, und dadurch, dass
der genannte Kiosk mit einer Decke versehen ist, die zumindest den Bereich der Anordnung der Aufnahmeeinrichtung und den Ort der Positionierung des Benutzers bei der Aufnahme des 3D-Bildes seines Gesichts abdeckt.

2. 3D-Gesichtserfassungsvorrichtung eines Individuums mittels Photogrammetrie nach Anspruch 1, **dadurch gekennzeichnet, dass** die Aufnahmezeit durch die Aufnahmemittel weniger als 20 Millisekunden beträgt.

3. 3D-Gesichtserfassungsvorrichtung eines Individuums mittels Photogrammetrie nach einem der Ansprüche 1 und 2, **dadurch gekennzeichnet, dass** der Kiosk (1) in der Horizontalen im Wesentlichen halbkreisförmigen Querschnitt aufweist und dass seine vertikale Wand die Aufnahmeeinrichtungen und Beleuchtungseinrichtungen trägt.

4. 3D-Gesichtserfassungsvorrichtung eines Individuums mittels Photogrammetrie nach einem der Ansprüche 1 bis 3, **dadurch gekennzeichnet, dass** die Aufnahmemittel auf einer gekrümmten Fläche, insbesondere auf einem Kugelabschnitt, angeordnet sind.

5. 3D-Gesichtserfassungsvorrichtung eines Individuums mittels Photogrammetrie nach einem der Ansprüche 1 bis 4, **dadurch gekennzeichnet, dass** die sekundären Aufnahmemittel, das heißt andere als das zentrale Aufnahmemittel, in einer Anzahl von sechs vorgesehen sind, nämlich drei (10, 11, 14), die in einer oberen Ebene relativ zu der horizontalen Ebene angeordnet sind, welche die optische Achse des zentralen Aufnahmemittels (8) enthält, und drei (12, 13, 15), die in einer unteren Ebene relativ zu der genannten Ebene angeordnet sind, wobei die jeweiligen Ebenen der Anordnung der oberen und unteren Aufnahmemittel zueinander symmetrisch bezüglich der horizontalen Ebene sind, die durch die optische Achse des zentralen Aufnahmemittels verläuft.

6. 3D-Gesichtserfassungsvorrichtung eines Individuums mittels Photogrammetrie nach einem der Ansprüche 1 bis 5, **dadurch gekennzeichnet, dass** die Interaktionseinrichtung aus einem Touchscreen besteht, der seitlich zu den Aufnahmeeinrichtungen und den Beleuchtungseinrichtungen angeordnet ist, und dass sie vorteilhafterweise durch einen Scanner für die Ausweispapiere des Benutzers ergänzt ist, sowie durch eine Einrichtung zur Herstellung und Ausgabe von insbesondere Zutrittsausweisen.

7. 3D-Gesichtserfassungsvorrichtung eines Individuums mittels Photogrammetrie nach einem der Ansprüche 1 bis 6, **dadurch gekennzeichnet, dass** sie eine zusätzliche, sogenannte Überwachungskamera umfasst, die unter der Decke (3) befestigt ist und vorteilhafterweise um eine vertikale Achse drehbar antreibbar ist.

## Claims

1. 3D face acquisition device of an individual's face by photogrammetry, consisting of a vertical kiosk (1), comprising:
- an acquisition organ proper (7) of said face, integrating a first means (8) for acquiring an image of said face,
- a lighting organ for lighting the user's face, comprising six light strips (9), oriented vertically, arranged in pairs symmetrically with respect to the vertical median plane passing through the optical axis of the central acquisition means (8);
- a unit for processing and managing these different organs, in particular for controlling the operation of said acquisition organs, and for storing the data thus acquired, as well as for triggering the lighting organs and the movement of the acquisition means, said processing and management unit being adapted to generate the simultaneous acquisition of said image of the face by the acquisition means (8; 10, 12; 11, 13), the acquisition time by said means being less than 50 milliseconds;
- an organ (4) for interaction of the user with the processing and management unit;
**characterized in that** the first means (8) for acquiring an image is central and surrounded by at least four means (10, 12; 11, 13) for acquiring said face, offset laterally and vertically relative to the first acquisition means (8), arranged in pairs symmetrically with respect to the optical axis of said first acquisition means (8), and arranged in pairs symmetrically with respect to a vertical median plane passing through the optical axis of the central acquisition means (8) and with respect to a horizontal plane also passing through the optical axis of the first acquisition means (8), and **in that**
said kiosk is provided with a ceiling covering at least the region in which the acquisition organ is installed and the location where the user is positioned during the acquisition of the 3D image of his or her face.

2. 3D face acquisition device of an individual's face by photogrammetry according to claim 1, **characterized in that** the acquisition time by the acquisition means is less than 20 milliseconds.

3. 3D face acquisition device of an individual's face by photogrammetry according to one of claims 1 and 2, **characterized in that** the kiosk (1) has a substantially semi-circular horizontal cross-section, and the vertical wall of which receives the acquisition and lighting organs.

4. 3D face acquisition device of an individual's face by photogrammetry according to one of claims 1 to 3, **characterized in that** the acquisition means are positioned on a curved surface, and in particular on a portion of a sphere.

5. 3D face acquisition device of an individual's face by photogrammetry according to one of claims 1 to 4, **characterized in that** the secondary acquisition means, that is to say other than the central acquisition means, are six in number, namely three (10, 11, 14) positioned in an upper plane relative to the horizontal plane containing the optical axis of the central acquisition means (8), and three (12, 13, 15) positioned in a lower plane relative to said plane, the respective planes of installation of the upper and lower acquisition means being symmetrical to each other with respect to the horizontal plane passing through the optical axis of the central acquisition means.

6. 3D face acquisition device of an individual's face by photogrammetry according to one of claims 1 to 5, **characterized in that** the interaction organ is formed by a touch screen positioned laterally relative to the acquisition organs and the lighting organs, and **in that** it is advantageously supplemented by a scanner for the user's identity papers, as well as by an organ for producing and issuing badges, in particular access badges.

7. 3D face acquisition device of an individual's face by photogrammetry according to one of claims 1 to 6, **characterized in that** it comprises an additional camera, referred to as a surveillance camera, fixed under the ceiling (3), and advantageously capable of being driven in a rotational movement about a vertical axis.
